# EUROPEAN PATENT APPLICATION

(11) **EP 4 194 728 A1**
(43) Date of publication of application: **14.06.2023**
(21) Application number: 21853972.4
(22) Date of filing: 27.07.2021
(51) Int. Cl.: F16K 31/06, F16K 47/04, F25B 41/345

(54) **VALVE**

(30) Priority: 04.08.2020 JP 2020132544
(71) Applicant: Eagle Industry Co., Ltd., Minato-ku Tokyo 105-8587 (JP)
(72) Inventor: FUKUDOME, Kohei, Tokyo 105-8587 (JP); KANZAKI, Toshinori, Tokyo 105-8587 (JP); SHIRAFUJI, Keigo, Tokyo 105-8587 (JP)
(74) Representative: WSL Patentanwälte Partnerschaft mbB
(86) International application number: PCT/JP2021/027770
(87) International publication number: WO 2022/030314

(57) **Abstract**

To provide a valve having a high valve opening adjustment accuracy. A valve V1 includes: a valve housing 10 provided with an inlet port 11 and an outlet port 12; a valve body 51 driven by a drive source 80; a valve seat 40a on which the valve body 51 sits; a spring 85 configured to urge the valve body 51 in a direction opposite to a driving direction by the drive source 80; and a communication means 21 configured to communicate the inlet port 11 with a back surface side space S of the valve body 51.

## Description

### {TECHNICAL FIELD}

The present invention relates to a valve used in an air conditioning system.

### {BACKGROUND ART}

An air conditioning system has a refrigeration cycle which mainly includes a compressor compressing a refrigerant to become superheated steam, a condenser cooling the refrigerant sent from the compressor to become a supercooled liquid, an expansion valve expanding the refrigerant sent from the condenser to become moist steam, and an evaporator heating the refrigerant sent from the expansion valve to become saturated steam and in which the refrigerant circulates in order of the compressor, the condenser, the expansion valve, and the evaporator.

For example, a valve of Patent Citation 1 is an electronic expansion valve and is able to adjust a valve opening degree between a valve seat formed in a valve housing and a valve body by driving the valve body in a valve opening direction by an electromagnetic force of a solenoid which is a drive source against an urging force of a spring. Further, a current value applied to the solenoid is set on the basis of the temperature or pressure of the refrigerant having passed through a condenser and a valve opening degree is adjusted, so that a supercooling degree of the condenser is maintained constant.

Further, it is also known to adjust the dryness of moist steam so that all refrigerants become saturated steam after the refrigerants pass through an evaporator by adjusting a valve opening degree of an expansion valve on the basis of the temperature or pressure of the refrigerant before or after passing through the evaporator.

### {CITATION LIST}

### {Patent Literature}

Patent Citation 1: JP 2001-153498 A (page 2, FIG. 1)

### {SUMMARY OF INVENTION}

### {Technical Problem}

Since the valve of Patent Citation 1 has a poppet valve structure in which a through-passage is closed by the valve body and the valve seat, the through-passage can be reliably closed. However, in the valve of Patent Citation 1, since the refrigerant having a high-pressure primary pressure is supplied from the condenser to the through-passage, there is concern that the valve opening degree with respect to the current value applied to the solenoid becomes slightly different due to the pressure of the refrigerant even when a force caused by the pressure of the refrigerant is applied to the valve body in the valve opening direction in addition to a driving force of the solenoid.

The present invention has been made by focusing on such a problem and an object of the present invention is to provide a valve having a high valve opening adjustment accuracy.

### {Solution to Problem}

In order to solve the foregoing problem, a valve according to the present invention includes: a valve housing provided with an inlet port and an outlet port; a valve body driven by a drive source; a valve seat on which the valve body sits; a spring configured to urge the valve body in a direction opposite to a driving direction by the drive source; and a communication means configured to communicate the inlet port with a back surface side space of the valve body. According to the aforesaid feature of the present invention, in a state in which the inlet port and the back surface side space of the valve body communicate with each other by the communication means, a fluid, for example, the refrigerant of a primary pressure flowing from the condenser into the inlet port is supplied to the back surface side space of the valve body. Accordingly, since it is possible to reduce the influence of the force of the refrigerant of the primary pressure applied to the valve body, the valve has a high valve opening adjustment accuracy. Further, since the refrigerant of the primary pressure is supplied to the back surface side space of the valve body, it is possible to reduce the driving force of the drive source in the vicinity of the valve closure position. In addition, the back surface side space of the valve body is a space on the side of the drive source in relation to the valve seat.

It may be preferable that the back surface side space of the valve body communicates with the outlet port through a throttle. According to this preferable configuration the back surface side space of the valve body is maintained at a pressure close to a primary pressure by the throttle.

It may be preferable that the throttle is formed by a guide hole formed in the valve housing and a valve body inserted to the guide hole. According to this preferable configuration, the throttle is a clearance formed between the valve body and the guide hole of the valve housing. Accordingly, the valve has a simple structure.

It may be preferable that the communication means is a through-hole which communicates with the inlet port and the back surface side space of the valve body. According to this preferable configuration, the communication means has a simple structure.

It may be preferable that the communication means constitutes a control pressure operation valve which controls a communication between the inlet port and the back surface side space of the valve body, and the control pressure operation valve includes a through-hole communicating with the inlet port and the back surface side space of the valve body, an urging means disposed in the through-hole, and an operation valve body urged in a valve closing direction by the urging means. According to this preferable configuration, the high primary pressure moves the operation valve body against the urging force of the urging means, opens the control pressure operation valve, and communicates the inlet port with the back surface side space of the valve body through the through-hole. Accordingly, the communication means can reduce the influence of the primary pressure applied to the valve body when opening the control pressure operation valve. Therefore, particularly when the primary pressure has a high pressure and the differential pressure between the primary pressure and a secondary pressure becomes large, the valve has a high valve opening adjustment accuracy. Further, the control pressure operation valve is used to control the refrigerant passage amount if necessary. Therefore, the leakage amount of the refrigerant of the primary pressure is small.

It may be preferable that the valve has a normal close structure. According to this preferable configuration, the valve is suitable as, for example, an expansion valve which controls a refrigerant from a condenser to an evaporator.

### {BRIEF DESCRIPTION OF DRAWINGS}

FIG. 1 is a schematic diagram showing a refrigeration cycle that adopts an expansion valve as a valve according to a first embodiment of the present invention.
FIG. 2 is a cross-sectional view showing a state in which the expansion valve in the first embodiment is closed.
FIG. 3 is a cross-sectional view showing a state in which the expansion valve in the first embodiment is opened.
FIG. 4 is an enlarged cross-sectional view showing a valve chamber of the expansion valve in the first embodiment.
FIG. 5 is a cross-sectional view showing a pressure distribution of FIG. 1, where a cross-section of each member is omitted in order to show a pressure distribution.
FIG. 6 is a cross-sectional view showing a state in which an expansion valve as a valve according to a second embodiment of the present invention is closed.
FIG. 7 is a diagram showing a pressure distribution in a state in which a control pressure operation valve and a valve of the expansion valve in the second embodiment are closed, where a cross-section of each member is omitted in order to show a pressure distribution.
FIG. 8 is a diagram showing a pressure distribution in a state in which the valve is closed and the control pressure operation valve is opened in the second embodiment, where a cross-section of each member is omitted in order to show a pressure distribution.
FIG. 9 is an enlarged cross-sectional view showing a main part when an expansion valve as a valve according to a third embodiment of the present invention is closed.
FIG. 10 is an enlarged cross-sectional view showing a main part when the expansion valve in the third embodiment of the present invention is opened.

### {DESCRIPTION OF EMBODIMENTS}

Modes for carrying out a valve according to the present invention will be described below with reference to embodiments.

### {First embodiment}

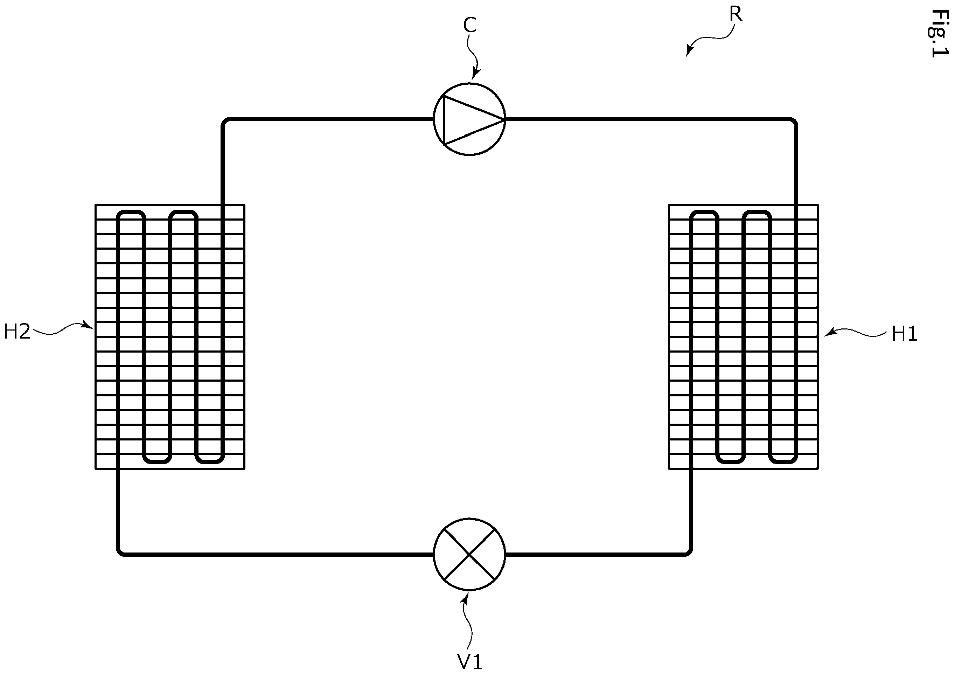

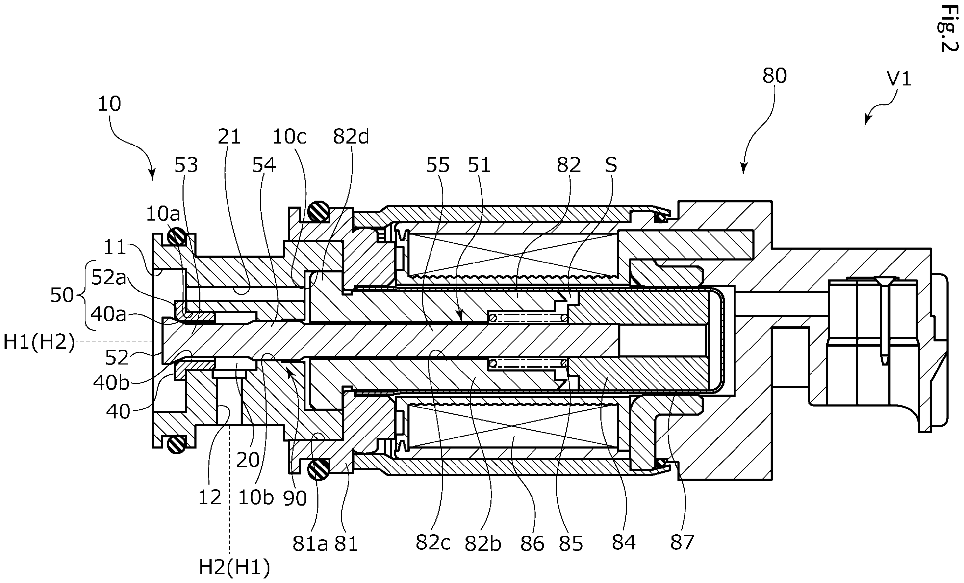

An expansion valve which is a valve according to a first embodiment of the present invention will be described with reference to FIGS. 1 to 5. In addition, the embodiment will be described by exemplifying the expansion valve, but can be also applied to other applications. Hereinafter, the left and right sides when viewed from the front side of FIG. 2 will be described as the left and right sides of the expansion valve. Specifically, the left side of the paper surface in which a valve housing 10 is disposed will be described as the left side of the expansion valve and the right side of the paper surface in which a solenoid 80 is disposed as a drive source will be described as the right side of the expansion valve.

As shown in FIG. 1, an expansion valve V1 as a valve according to the first embodiment of the present invention constitutes a refrigeration cycle R used in an air conditioning system of an automobile or the like together with a compressor C, an indoor heat exchanger H1, an outdoor heat exchanger H2, and the like.

First, the refrigeration cycle R will be described. The refrigeration cycle R is configured to circulate the refrigerant in order of the compressor C, the heat exchanger H1, the expansion valve V1, and the heat exchanger H2 in a heating mode. The refrigerant becomes superheated steam by the compressor C, becomes a supercooled liquid by the heat exchange with the indoor air using the heat exchanger H1, becomes moist steam by being depressurized from a high-pressure primary pressure to a low-pressure secondary pressure using the expansion valve V1, and becomes saturated steam by the heat exchange with the outdoor air using the heat exchanger H2. Further, the indoor air is heated by the heat exchange with the heat exchanger H1. That is, in the heating mode, the heat exchanger H1 serves as a condenser and the heat exchanger H2 serves as an evaporator.

Further, the refrigeration cycle R is configured to circulate the refrigerant in order of the compressor C, the heat exchanger H2, the expansion valve V1, and the heat exchanger H1 in a cooling mode. The refrigerant becomes superheated steam by the compressor C, becomes a supercooled liquid by the heat exchange with the outdoor air using the heat exchanger H2, becomes moist steam by being depressurized from a high-pressure primary pressure to a low-pressure secondary pressure using the expansion valve V1, and becomes saturated steam by the heat exchange with the indoor air using the heat exchanger H1. Further, the indoor air is cooled by the heat exchange with the heat exchanger H1. That is, in the cooling mode, the heat exchanger H1 serves as an evaporator and the heat exchanger H2 serves as a condenser.

In addition, in the following description, the refrigeration cycle R is used for heating unless otherwise specified. Similarly, the heat exchanger H1 is referred to as a condenser H1 and the heat exchanger H2 is referred to as an evaporator H2 on the basis of the heating mode.

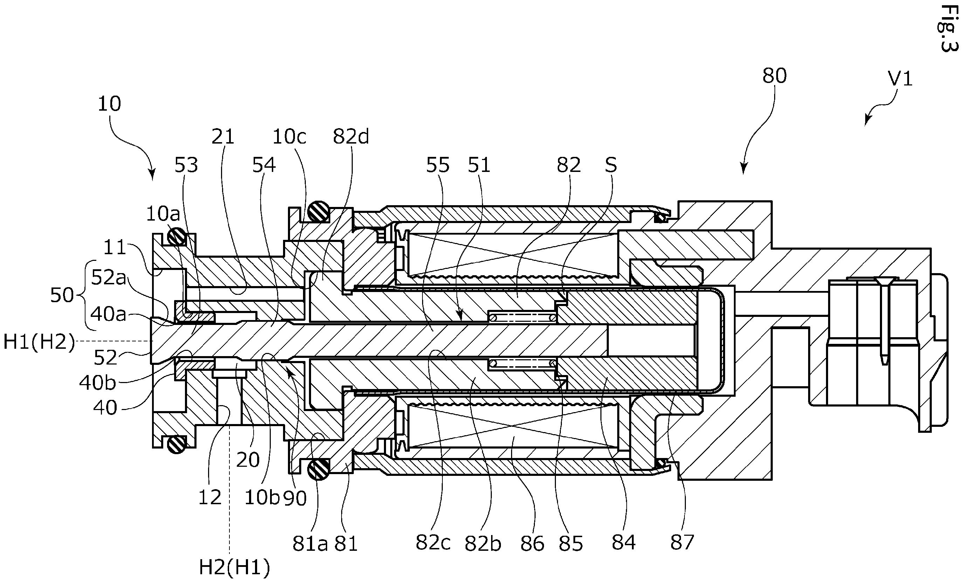

Referring to FIGS. 2 and 3, the expansion valve V1 is disposed between the condenser H1 and the evaporator H2. On the basis of the temperature difference of the refrigerants at the inlet side and the outlet side of the evaporator H2, a current flowing through a coil 86 constituting the solenoid 80 is set and the valve opening degree of a valve 50 of the expansion valve V1 is adjusted. Accordingly, when the refrigerant passes through the valve 50, the pressure is adjusted from a high-pressure primary pressure P1 to a relatively low-pressure secondary pressure P2 and the temperature is adjusted from the high temperature to the low temperature. Accordingly, all refrigerants which are supercooled liquids sent from the condenser H1 are adjusted to the dryness of the moist steam that can transition to the saturated steam after passing through the evaporator H2.

In this embodiment, the valve 50 includes a valve body 51 and a valve seat 40a. The valve seat 40a is formed in a tubular valve seat member 40 press-fitted into a concave portion 10a of a valve housing 10. When a tapered surface 52a at a front end portion 52 of the valve body 51 comes into contact with and separates from the valve seat 40a, the valve 50 is opened and closed.

Next, the structure of the expansion valve V1 will be described. As shown in FIGS. 2 and 3, the expansion valve V1 mainly includes the valve housing 10, the valve body 51, and the solenoid 80. The valve housing 10 is formed of a metal material or a resin material. The valve body 51 has an axial left end portion disposed inside the valve housing 10. The solenoid 80 is connected to the valve housing 10 and is used for applying a driving force to the valve body 51.

As shown in FIGS. 2 and 3, the valve body 51 includes a front end portion 52, a small-diameter portion 53, a large-diameter portion 54, and a base portion 55 in order from the axial left end. Further, the valve body 51 also serves as a rod disposed to penetrate the coil 86 of the solenoid 80.

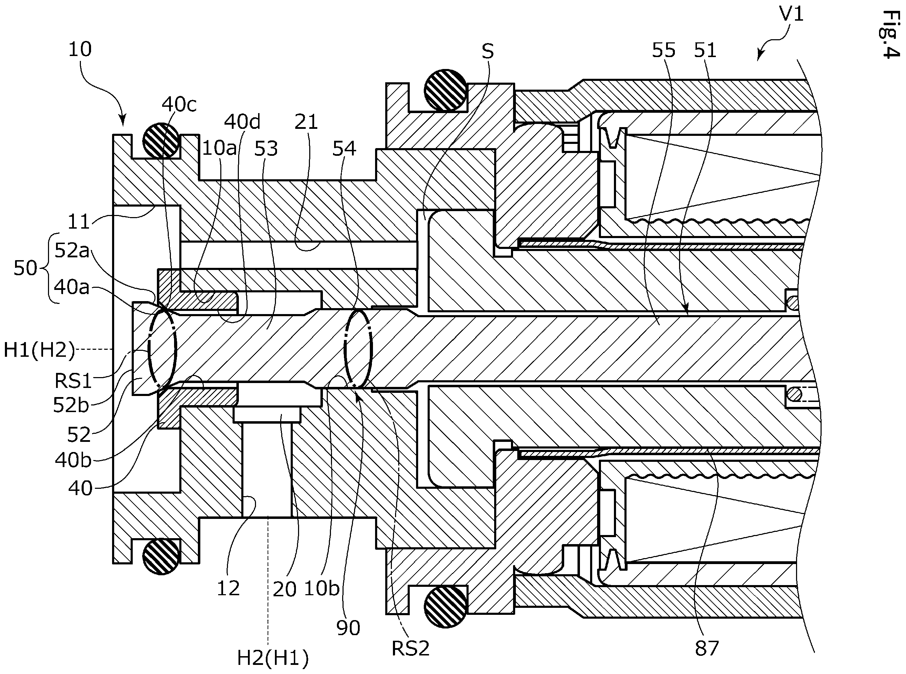

As shown in FIG. 4, the front end portion 52 includes a front end surface 52b and a tapered surface 52a and is formed in a trapezoidal shape in a cross-sectional view. The front end surface 52b is formed in a substantially flat circular shape. The tapered surface 52a extends from the front end surface 52b toward the axial right side with a constant cross-section and has a diameter gradually decreases as it goes toward the axial right side.

The small-diameter portion 53 is a columnar body extending from the axial right end of the front end portion 52 toward the axial right side with a constant cross-section and is formed to have a diameter smaller than a through-passage 40b to be described later.

The large-diameter portion 54 is a columnar body having a diameter larger than that of the small-diameter portion 53 and both axial ends gradually decrease in diameter.

The base portion 55 is a columnar body which extends from the axial right end of the large-diameter portion 54 toward the axial right side with a constant cross-section. The base portion 55 has a diameter smaller than that of the large-diameter portion 54.

As shown in FIGS. 2 and 3, an inlet port 11 and the concave portion 10a are formed on the inner diameter side of the axial left end of the valve housing 10. The inlet port 11 is recessed toward the axial right side and communicates with the condenser H1. The concave portion 10a is further recessed toward the axial right side at the radial center of the inlet port 11. Further, an outlet port 12 which penetrates in the radial direction communicates with the concave portion 10a. The outlet port 12 also communicates with the evaporator H2.

In addition, when the refrigeration cycle R is used for cooling, the outlet port 12 communicates with the heat exchanger H1 and the inlet port 11 communicates with the heat exchanger H2.

The valve seat member 40 is integrally fixed to the concave portion 10a in a substantially sealed state by being press-fitted from the axial left side.

As shown in FIG. 4, the valve seat member 40 is provided with the through-passage 40b which penetrates in the axial direction. The through-passage 40b includes a tapered surface 40c and a peripheral wall surface 40d. The tapered surface 40c gradually decreases in diameter as it goes from the axial left end toward the axial right side. The peripheral wall surface 40d extends substantially in parallel to the axial direction. A boundary between the tapered surface 40c and the peripheral wall surface 40d is the valve seat 40a.

Further, a cross-sectional area RS1 of a portion sitting on the valve seat 40a in the tapered surface 52a of the front end portion 52 is substantially the same as a maximum cross-sectional area RS2 of the large-diameter portion 54 of the valve body 51. In other words, the cross-sectional area RS1 is the effective pressure receiving area of the front end portion 52 and the maximum cross-sectional area RS2 is the effective pressure receiving area of the large-diameter portion 54.

Returning to FIGS. 2 and 3, a valve chamber 20 is formed inside the valve housing 10 by the concave portion 10a and the through-passage 40b of the valve seat member 40. A part of the front end portion 52 of the valve body 51 and a part of the small-diameter portion 53 and the large-diameter portion 54 are disposed inside the valve chamber 20 to be movable in a reciprocating manner in the axial direction.

The inner peripheral surface of the valve housing 10 is provided with a guide hole 10b which is formed on the side of the solenoid 80 in relation to the valve seat 40a and the valve chamber 20 so that the outer peripheral surface of the large-diameter portion 54 of the valve body 51 is slidable therethrough. In addition, a minute clearance which is a throttle 90 is formed between the inner peripheral surface of the guide hole 10b and the outer peripheral surface of the valve body 51 when the peripheral surfaces are slightly separated from each other. Accordingly, the valve body 51 is smoothly and relatively movable in the axial direction with respect to the valve housing 10.

Further, the valve housing 10 is provided with a concave portion 10c in which the inner diameter side of the axial right end is recessed toward the axial left side. A flange portion 82d of a center post 82 is press-fitted and fixed to the concave portion 10c in a sealed state from the axial right side. Furthermore, a casing 81 is fixed to the right end of the valve housing 10 from the axial right side of the flange portion 82d. Accordingly, the valve housing 10, the casing 81, and the center post 82 are integrally connected to each other. In addition, an opening end on the side of the solenoid 80 in the guide hole 10b is formed on the inner diameter side of the bottom surface of the concave portion 10c of the valve housing 10.

Further, a through-hole 21 which is a communication means extending in the axial direction is formed between the bottom portions of the concave portions 10a and 10c at both axial ends of the valve housing 10. The through-hole 21 is formed to have a constant cross-section and communicates with the inlet port 11 and a space S inside the solenoid 80.

As shown in FIGS. 2 and 3, the solenoid 80 mainly includes the casing 81, the center post 82, the valve body 51, a movable iron core 84, a coil spring 85, an excitation coil 86, and a sleeve 87. The casing 81 includes an opening portion 81a which opens toward the axial left side. The center post 82 having a substantially cylindrical shape is inserted into the opening portion 81a of the casing 81 from the axial left side and is disposed between the inner diameter side of the casing 81 and the inner diameter side of the valve housing 10. The valve body 51 is inserted through the center post 82 to be movable in a reciprocating manner in the axial direction and the axial left end portion is disposed inside the valve housing 10. The axial right end portion of the valve body 51 is inserted and fixed to the movable iron core 84. The coil spring 85 is provided between the center post 82 and the movable iron core 84 and urges the movable iron core 84 toward the axial right side which is the valve closing direction of the valve 50. The coil 86 is wound on the outside of the center post 82 through a bobbin. The sleeve 87 which is formed in a bottomed cylindrical shape accommodates a part of the center post 82, the movable iron core 84, the coil spring 85, and a part of the valve body 51.

The center post 82 is formed of a rigid body which is a magnetic material such as iron or silicon steel and includes a cylindrical portion 82b and a flange portion 82d. The cylindrical portion 82b is provided with an insertion hole 82c which extends in the axial direction and through which the valve body 51 is inserted. The flange portion 82d is formed in an annular shape which extends toward the outer diameter direction from the outer peripheral surface at the axial left end portion of the cylindrical portion 82b.

The space S inside the solenoid 80 is a space mainly inside the sleeve 87 located on the back surface side of the valve body 51 partitioned from the valve chamber 20 and includes a space inside the concave portion 10c and the center post 82.

Further, the space S communicates with the downstream side of the valve seat 40a of the valve chamber 20 through the throttle 90.

Accordingly, the refrigerant of a primary pressure P1 can also flow into the space S through the inlet port 11 and the through-hole 21 and flow out from the outlet port 12 through the throttle 90 and the valve chamber 20.

Next, the operation of the expansion valve V1 and mainly the opening and closing operation thereof will be described.

First, a state in which the expansion valve V1 is not energized will be described. As shown in FIG. 2, when the expansion valve V1 is not energized, the movable iron core 84 is pressed toward the axial right side by the urging force Fₛₚ of the coil spring 85. Accordingly, the valve body 51 is pressed toward the axial right side and the tapered surface 52a of the front end portion 52 of the valve body 51 sits on the valve seat 40a. That is, the valve 50 is closed.

In the closed state, the valve 50 does not allow the refrigerant to pass therethrough. On the other hand, the downstream side of the valve seat 40a of the valve chamber 20 communicates with the evaporator H2 having a relatively low pressure through the outlet port 12. Therefore, a fluid having a secondary pressure P2 which is relatively lower than the primary pressure P1 flows into the downstream side of the valve seat 40a of the valve chamber 20.

As shown in FIG. 3, in the energized state (that is, normal control, so-called duty control) of the expansion valve V1, when an electromagnetic force Fₛₒₗ generated by applying a current to the solenoid 80 exceeds the urging force Fₛₚ of the coil spring 85 (i.e., Fₛₒₗ > Fₛₚ), the movable iron core 84 is pulled toward the center post 82 side, that is, the axial left side. Further, the valve body 51 fixed to the movable iron core 84 moves toward the axial left side together with the movable iron core 84. Accordingly, the tapered surface 52a of the front end portion 52 of the valve body 51 is separated from the valve seat 40a and the valve 50 is opened.

The valve 50 expands the refrigerant which passes therethrough in an open state. Accordingly, the valve 50 in an open state can reduce the pressure of the refrigerant from the primary pressure P1 to the secondary pressure P2. That is, the fluid of the secondary pressure P2 flows into the downstream side of the valve seat 40a in the valve chamber 20.

Further, a minute gap constituting the throttle 90 is narrower than the maximum opening area of the valve 50. Therefore, the refrigerant flowing into the space S during normal control is maintained at a pressure closer to the primary pressure P1.

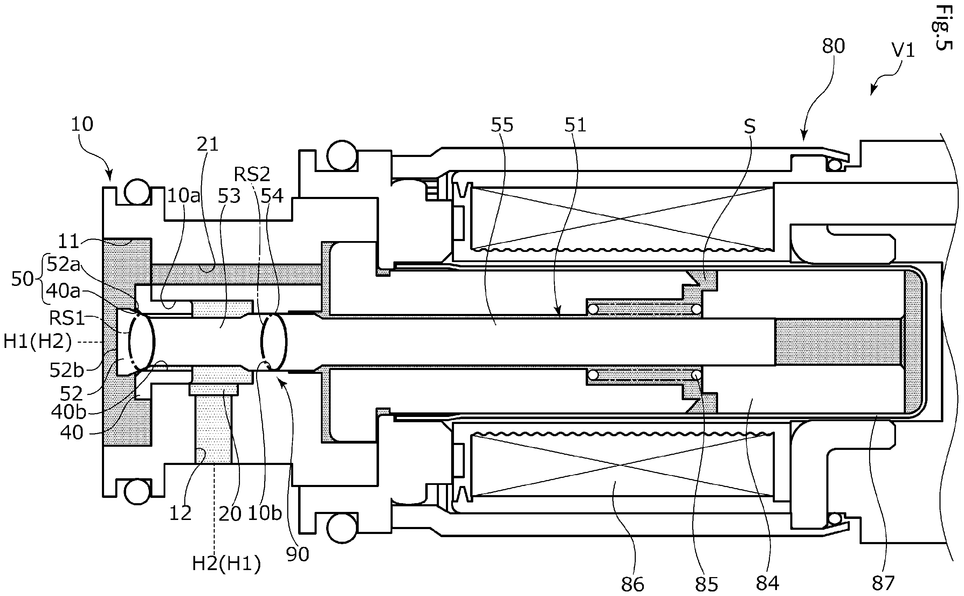

Next, a force F_{rod} applied to the valve body 51 will be described. As indicated by the fine dot pattern in FIG. 5, the fluid of the primary pressure P1 flows into the inlet port 11, the through-hole 21, the upstream side of the valve seat 40a of the valve chamber 20, and the space S. Further, as indicated by the coarse dot pattern in FIG. 5, the fluid of the secondary pressure P2 flows into the downstream side of the valve seat 40a of the valve chamber 20 and the outlet port 12. In addition, in FIG. 5, the valve 50 is closed, but the same is applied even when the valve is open. Therefore, the valve 50 in an open state is not shown.

Accordingly, the primary pressure P1 and the secondary pressure P2 of the refrigerant are respectively applied to the valve body 51 in the valve closing direction and the valve opening direction in addition to the urging force Fₛₚ of the coil spring 85 applied in the valve closing direction and the driving force Fₛₒₗ of the solenoid 80 applied in the valve opening direction in an energized state.

More specifically, a force applied from the refrigerant to the valve body 51 with the valve closing direction as positive and the valve opening direction as negative is obtained by subtracting the force Fₚ₂ = P2 × (RS1 - RS2) due to the secondary pressure P2 from the force Fₚ₁ = P1 × (RS1 - RS2) due to the primary pressure P1.

From these facts, the force F_{rod} = Fₛₚ + Fₚ₁ - Fₚ₂ is applied to the valve body 51 with the valve closing direction as positive and the valve opening direction as negative. As described above, since the cross-sectional areas RS1 and RS2 are substantially the same, the forces Fₚ₁ and Fₚ₂ are zero. Therefore, the urging force Fₛₚ of the coil spring 85 and the driving force Fₛₒₗ of the solenoid 80 (i.e., F_{rod} = Fₛₚ + Fₛₒₗ) are mainly applied to the valve body 51.

As described above, the refrigerant of the primary pressure P1 flowing from the condenser H1 into the inlet port 11 is supplied to the space S in a state in which the inlet port 11 and the space S inside the solenoid 80 communicate with each other by the through-hole 21. Accordingly, since both the force Fₚ₁ due to the primary pressure P1 and the force Fₚ₂ due to the secondary pressure P2 are zero, the through-hole 21 can reduce the influence of the force of the refrigerant of the primary pressure applied to the valve body 51. Therefore, the expansion valve V1 has a high valve opening adjustment accuracy of the valve 50.

Further, mainly when the driving force Fₛₒₗ of the solenoid 80 exceeds the urging force Fₛₚ of the coil spring 85, the valve 50 is opened. Therefore, since the refrigerant of the primary pressure supplied to the back surface side space S of the valve body 51 is supplied through the through-hole 21, it is possible to reduce the driving force of the solenoid 80 in the vicinity of the valve closure position, that is, when the valve 50 in a closed state is just opened and when the valve 50 is maintained in a slightly opened state.

Additionally, in this embodiment, a configuration has been described in which the cross-sectional area RS1 and the cross-sectional area RS2 are substantially the same, but the present invention is not limited thereto. That is, the cross-sectional area RS1 may be larger than the cross-sectional area RS2 (RS1 > RS2) or the cross-sectional area RS1 may be smaller than the cross-sectional area RS2 (RS1 < RS2). Even in such a configuration, the force for the overlapping area is canceled and only the force for the area of the difference from the cross-sectional areas RS1 and RS2 is applied to the valve body 51. Therefore, the refrigerant of the primary pressure supplied to the back surface side space S of the valve body 51 can reduce the influence on the valve body 51 due to the pressure of the refrigerant.

Further, in this embodiment, an example has been described in which the pressure of the refrigerant inside the space S is the primary pressure, but the present invention is not limited thereto. That is, the pressure may be close to the primary pressure.

Further, the throttle 90 is a clearance formed between the valve body 51 and the guide hole 10b of the valve housing 10. Accordingly, the expansion valve V1 has a simple structure.

Further, the communication means of this embodiment is the through-hole 21 which communicates with the inlet port 11 and the space S. Therefore, the communication means has a simple structure.

Further, the expansion valve V1 has a normal close structure in which the valve 50 is closed in a non-energized state. Therefore, the expansion valve V1 can maintain the pressure on the side of the condenser H1 at the primary pressure P1 in a non-energized state. That is, the expansion valve can maintain the refrigerant on the side of the condenser H1 as a supercooled liquid even when the refrigeration cycle R is stopped. Accordingly, the expansion valve V1 is suitable as the expansion valve since all the refrigerants can be transferred to saturated steam in the evaporator H2 to heat the refrigerant as in the normal control even immediately after the refrigeration cycle R is started.

Further, in the expansion valve V1, the direction in which the refrigerant of the primary pressure P1 is applied to the front end portion 52 of the valve body 51 is the same as the valve closing direction. Therefore, even when the pressure of the primary pressure P1 suddenly increases, the differential pressure between the pressure inside the inlet port 11 and the pressure inside the space S is applied to the valve body 51 in the valve closing direction. Accordingly, the expansion valve V1 can prevent the valve body 51 from being unintentionally opened.

### {Second embodiment}

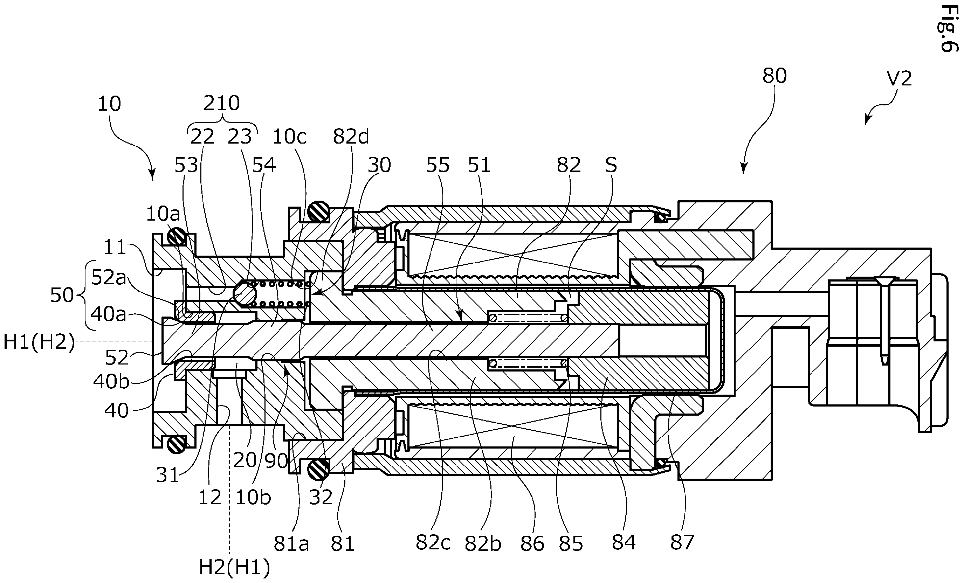

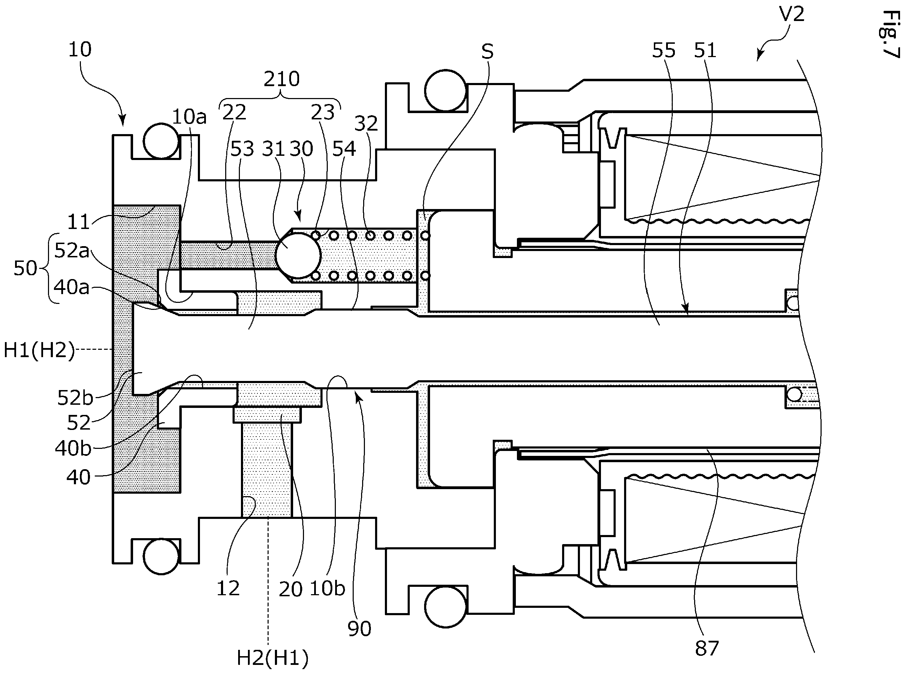

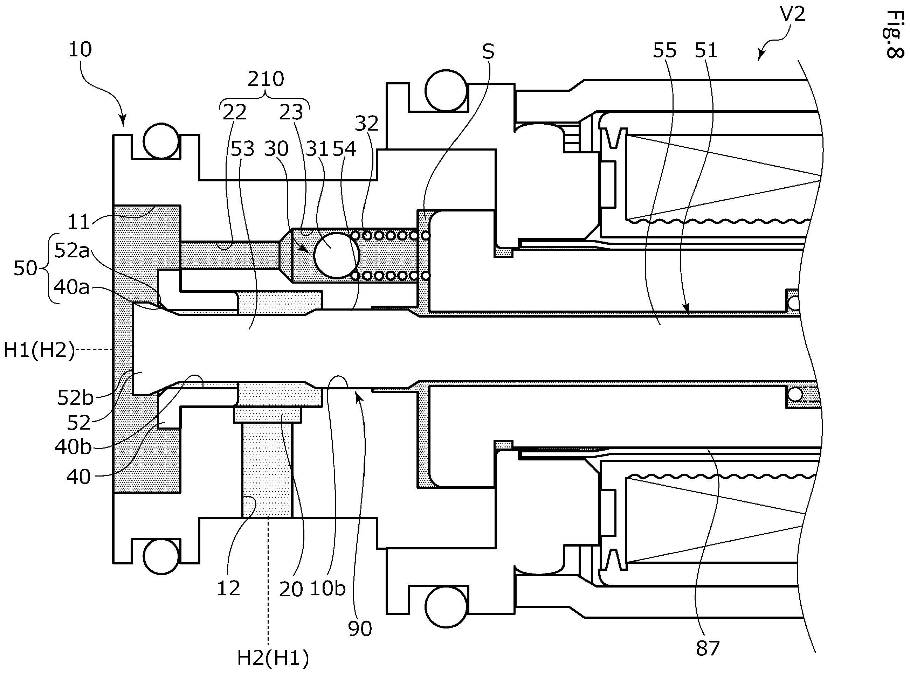

An expansion valve as a valve according to a second embodiment of the present invention will be described with reference to FIGS. 6 to 8. In addition, the description of the overlapping configuration in the same configuration as that of the first embodiment will be omitted. Additionally, FIGS. 6 and 7 show a state in which the primary pressure P1 inside the inlet port 11 is low and FIG. 8 shows a state in which the primary pressure P1 inside the inlet port 11 is high.

As shown in FIGS. 6 to 8, in this embodiment, a through-hole 210 of the valve housing 10 of an expansion valve V2 includes a small-diameter hole portion 22 and a large-diameter hole portion 23. The axial left end of the small-diameter hole portion 22 communicates with the inlet port 11. The large-diameter hole portion 23 continues to the axial right end of the small-diameter hole portion 22 and has a diameter larger than that of the small-diameter hole portion 22.

An operation valve body 31 and a return spring 32 which is an urging means are disposed in the large-diameter hole portion 23. The operation valve body 31 has a ball shape. In the return spring 32, the axial right end is fixed to the center post 82 and the axial left end comes into contact with the operation valve body 31. The operation valve body 31 and the return spring 32 constitute a control pressure operation valve 30 which controls the communication between the inlet port 11 and the space S inside the solenoid 80.

As shown in FIG. 7, the operation valve body 31 is urged toward the axial left side by the return spring 32 and sits on the opening end of the small-diameter hole portion 22 of the through-hole 210 to close the control pressure operation valve 30 in a state in which the primary pressure P1 inside the inlet port 11 is low. Accordingly, the inlet port 11 and the space S do not communicate with each other.

At this time, as indicated by the fine dot pattern in FIG. 7, the primary pressure P1 (Fₚ₁₁) inside the inlet port 11 is applied toward the axial right side of the operation valve body 31 and the urging force F_{SP} of the return spring 32 and the pressure Fₚ₁₂ of the refrigerant inside the space S is applied toward the axial left side thereof (Fₚ₁₁ < F_{SP} + Fₚ₁₂).

Further, as shown in FIG. 8, the operation valve body 31 moves toward the axial right side against the urging force of the return spring 32 and the pressure of the refrigerant inside the space S in a state in which the primary pressure P1 inside the inlet port 11 is high. Accordingly, the control pressure operation valve 30 is opened. Therefore, the inlet port 11 and the space S communicate with each other.

At this time, the primary pressure P1 Fₚ₁₁ inside the inlet port 11 exceeding the pressure Fₚ₁₂ of the refrigerant inside the space S and the urging force F_{SP} of the return spring 32 is applied to the operation valve body 31 toward the axial right side (Fₚ₁₁ > F_{SP} + Fₚ₁₂).

As in the state of FIG. 8, when the control pressure operation valve 30 is opened and the inlet port 11 and the space S communicate with each other, the pressure difference of the refrigerant inside the space S and the inlet port 11 decreases as indicated by the fine dot pattern in FIG. 8. In this way, when the control pressure operation valve 30 is opened, the influence on the valve body 51 due to the primary pressure P1 of the refrigerant inside the inlet port 11 and the valve chamber 20 decreases. Therefore, the through-hole 210 at the time of opening the control pressure operation valve 30 can smoothly operate the valve body 51 toward the axial left side (i.e., the valve closing direction).

In this way, the high primary pressure P1 inside the inlet port 11 moves the operation valve body 31 against the urging force (F_{SP}) of the return spring 32 and opens the control pressure operation valve 30 so that the inlet port 11 and the space S inside the solenoid 80 communicate with each other through the through-hole 210. Accordingly, the through-hole 210 can reduce the influence of the pressure of the refrigerant applied to the valve body 51 at the time of opening the control pressure operation valve 30. Therefore, particularly when the primary pressure P1 has a high pressure and the differential pressure between the primary pressure P1 and the secondary pressure P2 becomes large, the expansion valve V2 has a high valve opening adjustment accuracy of the valve 50. Further, the control pressure operation valve 30 is used to control the refrigerant passage amount if necessary. Therefore, the leakage amount of the refrigerant of the primary pressure P1 is small.

Further, the refrigerant inside the space S can be smoothly released from the minute gap between the inner peripheral surface of the guide hole 10b and the outer peripheral surface of the valve body 51, that is, the throttle 90 to the outlet port 12. Accordingly, the throttle 90 can maintain the control pressure operation valve 30 in an open state. Specifically, the throttle 90 can prevent the pressure of the refrigerant in the space S from suddenly rising and immediately closing the control pressure operation valve 30.

### {Third embodiment}

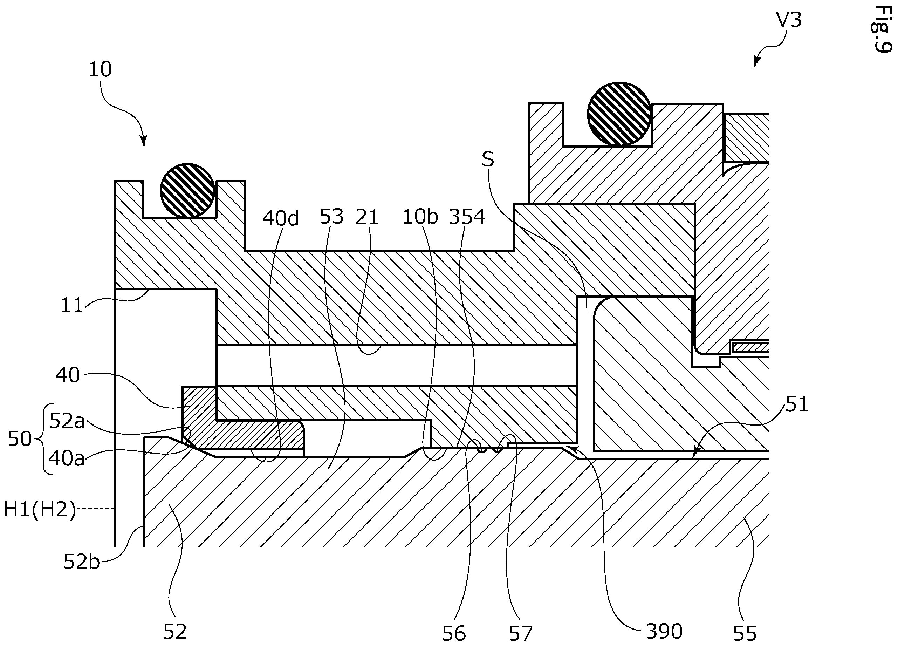

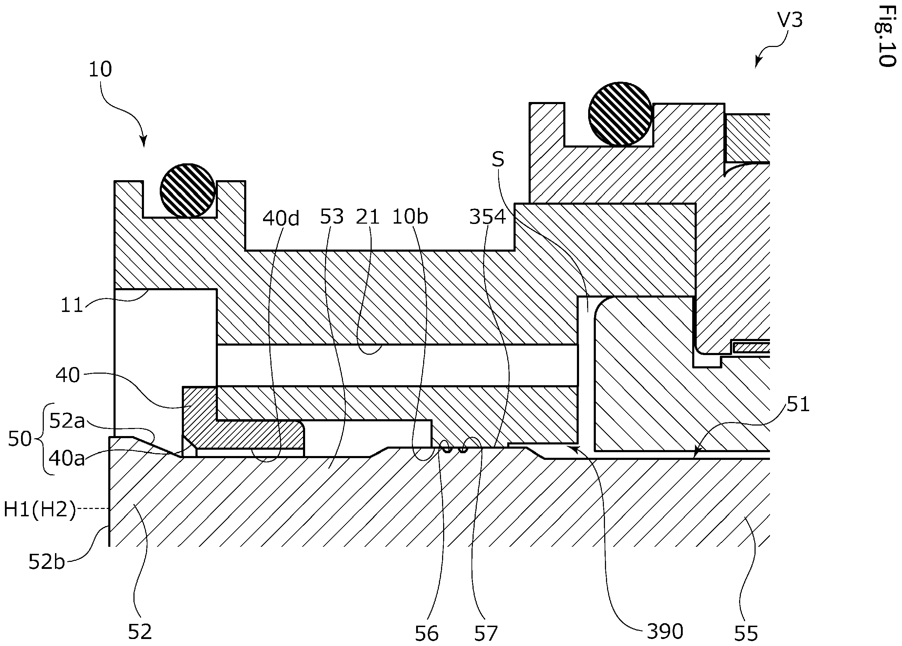

An expansion valve as a valve according to a third embodiment of the present invention will be described with reference to FIGS. 9 and 10. In addition, the description of the overlapping configuration in the same configuration as those of the first and second embodiments will be omitted.

As shown in FIGS. 9 and 10, in this embodiment, two annular grooves 56 and 57 are formed on an outer peripheral surface of a large-diameter portion 354 of the valve body 51 of an expansion valve V3. The annular grooves 56 and 57 are annular grooves that are opened respectively in the outer diameter direction and recessed in the inner diameter direction and their bottom surfaces are curved respectively in a semicircular arc shape. In addition, each of the bottom surfaces of the annular grooves 56 and 57 may have a curved shape other than a semicircular arc shape, a V shape, a U shape, or the like and may be appropriately changed.

Further, the annular groove 56 is disposed on the axial left side in relation to the annular groove 57. These annular grooves 56 and 57 are disposed at the center in relation to both axial edges of the guide hole 10b of the valve housing 10 even when the valve 50 is closed and opened. That is, a substantially constant clearance is formed with the guide hole 10b at the position provided with the annular grooves 56 and 57 of the large-diameter portion 354 and in the vicinity thereof so as to allow a reciprocating movement.

When the refrigerant flows through a throttle 390 in the axial direction, a vortex of the refrigerant having a center in the circumferential direction is generated inside the annular grooves 56 and 57. Due to the vortex, the large-diameter portion 354 is aligned so that its axis matches the axis of the guide hole 10b. Accordingly, it is possible to reduce the driving force necessary for moving the valve body 51.

Further, since the vortex is generated inside the annular grooves 56 and 57, the refrigerant that tends to move relatively through the throttle 90 in the axial direction does not easily move. Therefore, the annular grooves 56 and 57 can prevent excessive leakage of the refrigerant from the space S to the outlet port 12.

Further, the annular grooves 56 and 57 of the large-diameter portion 354 face the guide hole 10b over the stroke range of the valve body 51. Therefore, the annular grooves 56 and 57 of the large-diameter portion 354 can stably align the valve body 51 and prevent excessive leakage of the refrigerant from the space S to the outlet port 12.

In addition, the number of the annular grooves may be one or three or more. Further, the annular groove may move toward the axial outside in relation to the guide hole 10b in the reciprocating movement.

Although the embodiments of the present invention have been described above with reference to the drawings, the specific configuration is not limited to these examples and is included in the present invention even if there are changes or additions within the scope of the present invention.

For example, in the above-described embodiments, an example has been described in which the valve opening degree is adjusted on the basis of the temperature difference of the refrigerant at the inlet side and the outlet side of the evaporator, but the present invention is not limited thereto. That is, the valve opening degree may be adjusted on the basis of the temperature or pressure of the refrigerant before or after passing through the condenser or the temperature or pressure of the refrigerant before or after passing through the evaporator or the configuration may be appropriately changed.

Further, in the above-described embodiments, an example has been described in which the expansion valve is formed such that the direction in which the refrigerant of the primary pressure is applied to the front end portion of the valve body is the same as the valve closing direction, but the present invention is not limited thereto. That is, the direction in which the refrigerant of the primary pressure is applied to the front end portion of the valve body may be the same as the valve opening direction. In such a case, the valve body may have a columnar shape extending with a constant cross-section. That is, the shape of the valve body may be appropriately changed.

Further, in the above-described embodiments, an example has been described in which the inlet port and the back surface side space of the valve body communicate with each other by the through-hole, but the present invention is not limited thereto. That is, the inlet port and the back surface side space of the valve body may communicate with each other by a large opening and a throttle member such as an orifice may be provided in the opening.

Further, in the above-described embodiments, an example has been described in which the control pressure operation valve is composed of the through-hole, the operation valve body, and the return spring, but the present invention is not limited thereto. That is, the inlet port and the space may communicate with each other when the center post is operated by the electromagnetic force of the solenoid and the inlet port and the space may communicate with each other when a member different from the center post is operated by the electromagnetic force of the solenoid.

Further, in the above-described embodiments, a configuration has been described in which the valve body also serves as the rod disposed to penetrate the coil of the solenoid, but the present invention is not limited thereto. That is, the valve body and the rod may be separate members.

Further, in the above-described embodiments, an example has been described in which the valve seat member including the valve seat and the valve housing including the guide hole are formed as separate members, but the present invention is not limited thereto. That is, the valve seat and the guide hole may be integrally formed on the inner peripheral surface of the valve housing.

Further, the guide portion is not limited to that formed in the valve housing and may be formed in, for example, a part of the insertion hole of the center post.

### {REFERENCE SIGNS LIST}

- 10: Valve housing
- 10b: Guide hole
- 11: Inlet port
- 12: Outlet port
- 20: Valve chamber
- 21: Through-hole (communication means)
- 30: Control pressure operation valve (communication means)
- 31: Operation valve body (communication means)
- 32: Return spring (urging means, communication means)
- 40a: Valve seat
- 50: Valve
- 51: Valve body
- 80: Solenoid (drive source)
- 85: Coil spring (spring)
- 90: Throttle
- 210: Through-hole (communication means)
- C: Compressor
- H1: Heat exchanger (condenser for heating, evaporator for cooling)
- H2: Heat exchanger (evaporator for heating, condenser for cooling)
- P1: Primary pressure
- P2: Secondary pressure
- R: Refrigeration cycle
- RS1: Cross-sectional area
- RS2: Cross-sectional area
- S: Space
- V1, V2: Expansion valve (valve)

## Claims

1. A valve, comprising:
a valve housing provided with an inlet port and an outlet port;
a valve body driven by a drive source;
a valve seat on which the valve body sits;
a spring configured to urge the valve body in a direction opposite to a driving direction by the drive source; and
a communication means configured to communicate the inlet port with a back surface side space of the valve body.

2. The valve according to claim 1,
wherein the back surface side space of the valve body communicates with the outlet port through a throttle.

3. The valve according to claim 2,
wherein the throttle is formed by a guide hole formed in the valve housing and a valve body inserted to the guide hole.

4. The valve according to any one of claims 1 to 3,
wherein the communication means is a through-hole which communicates with the inlet port and the back surface side space of the valve body.

5. The valve according to any one of claims 1 to 3,
wherein the communication means constitutes a control pressure operation valve which controls a communication between the inlet port and the back surface side space of the valve body, and the control pressure operation valve includes a through-hole communicating with the inlet port and the back surface side space of the valve body, an urging means disposed in the through-hole and an operation valve body urged in a valve closing direction by the urging means.

6. The valve according to any one of claims 1 to 5,
wherein the valve has a normal close structure.
